Europäisches Patentamt

European Patent Office

Office européen des brevets

(19)

(11) Veröffentlichungsnummer: **0 242 859 B1**

(12) **EUROPÄISCHE PATENTSCHRIFT**

(45) Veröffentlichungstag der Patentschrift: **18.12.91**

(51) Int. Cl.5: **B60N 2/06**

(21) Anmeldenummer: **87105864.0**

(22) Anmeldetag: **22.04.87**

---

(54) Gleitschienenführung für Fahrzeugsitze.

---

(30) Priorität: **24.04.86 DE 3613832**

(43) Veröffentlichungstag der Anmeldung:
**28.10.87 Patentblatt 87/44**

(45) Bekanntmachung des Hinweises auf die
Patenterteilung:
**18.12.91 Patentblatt 91/51**

(84) Benannte Vertragsstaaten:
**DE ES FR GB IT SE**

(56) Entgegenhaltungen:
**DE-A- 2 659 311**
**DE-C- 188 097**
**DE-U- 7 700 316**
**FR-A- 728 326**

(73) Patentinhaber: **P.A. Rentrop, Hubbert & Wagner Fahrzeugausstattungen GmbH & Co. KG
Nordsehler Strasse 38
W-3060 Stadthagen(DE)**

(72) Erfinder: **Ernst, Hans Hellmut
Bismarkallee 50
W-2070 Ahrensburg(DE)**

(74) Vertreter: **Patentanwälte Dipl.-Ing. Bodo Thielking Dipl.-Ing. Otto Elbertzhagen
Gadderbaumer Strasse 20
W-4800 Bielefeld 1(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Gleitschienenführung für Fahrzeugsitze, insbesondere von Personenkraftwagen, mit einer am Fahrzeugboden festen Außenschiene und einer darin längsverschieblichen, dem Sitz zugeordneten Innenschiene und mit einer Verstelleinrichtung zur Ein- und Feststellung der Lage der Schienen zueinander, ferner mit einer beschleunigungssensitiven Blockiervorrichtung, die mindestens ein Klemmelement aufweist, das an einer Schiene gehalten und zur blockierenden Anlage an einer Fläche eines axial sich erstreckenden Flansches der anderen Schiene ausgebildet ist.

Bei einer derartigen bekannten Gleitschienenführung (DE-U 7 700 316) besteht die beschleunigungssensitive Blockiervorrichtung aus einem pendelartig schwenkbaren Sperrteil, das an einer Schiene gehalten ist und mindestens eine mit der anderen Schiene zusammenwirkende Greifkante aufweist. Die bekannte Vorrichtung wirkt ausschließlich im Crashfall, also dann, wenn extrem hohe negative Beschleunigungen auf das Fahrzeug einwirken.Mit der bekannten Blockiervorrichtung werden dabei die Außen- und Innenschienen der Gleitschienenführung fest gegeneinander versperrt, wodurch die Verstelleinrichtung für das Schienenführungssystem entlastet wird. Die im Crashfall auf die Gleitschienen einwirkenden Kräfte sind besonders hoch, wenn die Gurte zum Rückhalten der auf dem Sitz sich befindlichen Person am Sitz selbst und nicht an der Fahrzeugzelle angreifen. Dies hat zur Folge, daß das Sperrteil mit der Greifkante so weit in die Wandung der entsprechenden Schiene eindringt, daß es nicht wieder aus der Blockierstellung zu lösen ist.

Bei Konstruktionen, bei denen die Sicherheitsgurte vollständig in den Sitz integriert sind, werden für die Ansprechschwelle der Blockiervorrichtungen die gleichen Vorschriften auf den Fahrzeugsitz zu übertragen sein, wie sie für Sicherheitsgurte schon seit langem gelten. Dies bedeutet, daß eine Lösung gefunden werden muß, bei der eine Blockierung (und damit eine Fähigkeit zur Übertragung der Kraft) bereits bei einem Wert von 0,4 g eintreten muß. Diese Größenordnung entspricht mittlerem Bremsen und mittelschnell gefahrenen Kurven.

Diese Anforderungen kann die bekannte, vorbeschriebene Konstruktion nicht erfüllen, da sie ausschließlich im Crashfall wirksam ist. Es ist ferner eine Aufzugsbremsvorrichtung bekannt (FR-A-72 83 26), die das Einwirken von zwei Klemmelementen auf einander gegenüberliegende Flanschflächen eines Steges zeigt.Diese bekannte gattungsfremde Vorrichtung wirkt ebenfalls ausschließlich in einem mit dem Crashfall vergleichbaren Fall: Bei Überschreiten vorgegebener Grenzwerte kommen die Klemmbacken zur Anlage und bleiben in Anlage.

Ausgehend von dem Stand der Technik liegt der Erfindung die Aufgabe zugrunde, eine Gleitschienenführung der gattungsgemäßen Art so auszubilden, daß sie zum Erfüllen von Sicherheitsanforderungen geeignet ist, welche in ähnlicher Weise an die Blockiervorrichtungen von Sicherheitsgurten gestellt werden. Die zu schaffende Gleitschienenführung soll so ausgebildet sein, daß eine Blockierwirkung nicht nur im Crashfall, sondern auch bei Überschreiten vorgegebener niedrigerer Grenzwerte der Beschleunigungskraft auftritt. Darüber hinaus soll die Blockiervorrichtung entsperren, sobald die Einwirkung der Beschleunigungskräfte aufhört.

Die Lösung dieser Aufgabe erfolgt erfindungsgemäß dadurch, daß am Klemmelement eine Sensorfeder angreift, welche nach Überschreiten einer vorgegebenen Beschleunigungsschwelle eine blockierende Anlage des Klemmelements an der Fläche des axial sich erstreckenden Flansches zuläßt und nach Unterschreiten einer vorgegebenen Beschleunigungsschwelle aus der Blockierstellung löst.

Mit der Erfindung lassen sich bei sehr geringem Platzbedarf im inneren geschützten Bereich der Außenschiene Klemm- oder Sperrorgane anordnen, die über eine Sensorfeder in der unblockierten Ruhelage gehalten werden und in Arbeitsstellung an der Fläche des axial sich erstreckenden Flansches angreifen. Die großflächige Lastübertragung zwischen Klemmelement und Flansch verhindert Verformungen, die das Lösen der Klemmelemente erschweren oder sogar verhindern.

Bevorzugte Ausführungsformen der Erfindung sind in den Unteransprüchen beschrieben.

Nachstehend werden bevorzugte Ausführungsbeispiele der Erfindung anhand der Zeichnung erläutert. Es zeigen:

| Figur 1 | - eine schematische Schnittansicht durch eine Gleitschienenführung für den Sitz eines Personenkraftwagens, |
|---|---|
| Figuren 2 - 6 | - schematische Ansichten, teilweise im Schnitt, von Blockiervorrichtungen für eine Gleitschienenführung nach Figur 1, |
| Fig. 7 | eine schematische Ansicht eines auf einer Gleitschienenführung angeordneten Fahrzeugsitzes,an dessen Lehne die Gurte eines Personenrückhaltesystems angeschlagen sind, |
| Fig. 8 | eine schematische Schnittansicht entsprechend Fig. 1 durch die Gleitschienenführung für den Sitz nach Fig. 7, |
| Fig. 9 | eine schematische Ansicht teil- |

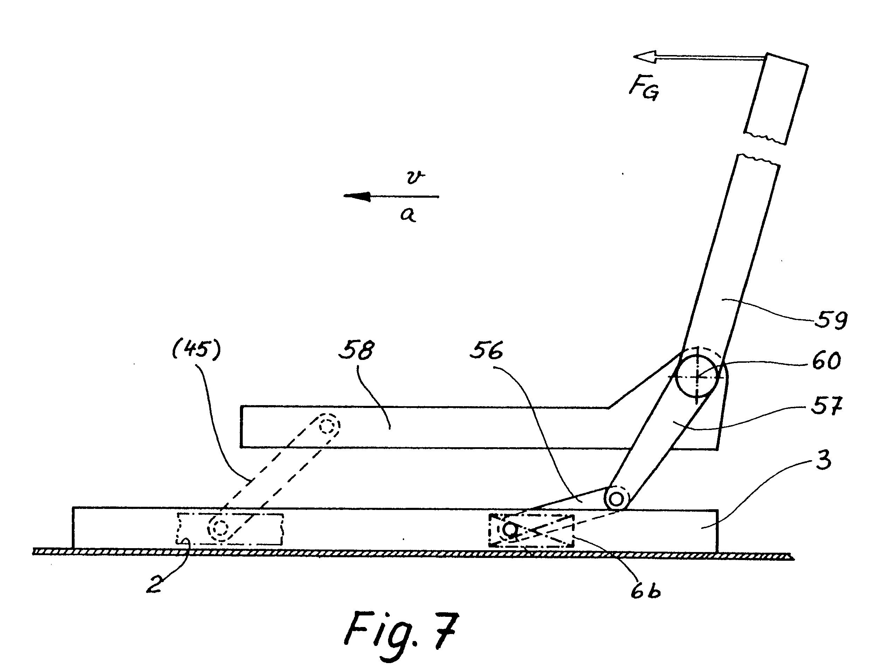

weise im Schnitt der Blockiervorrichtung für die Lehne des
Sitzes nach Fig. 7.

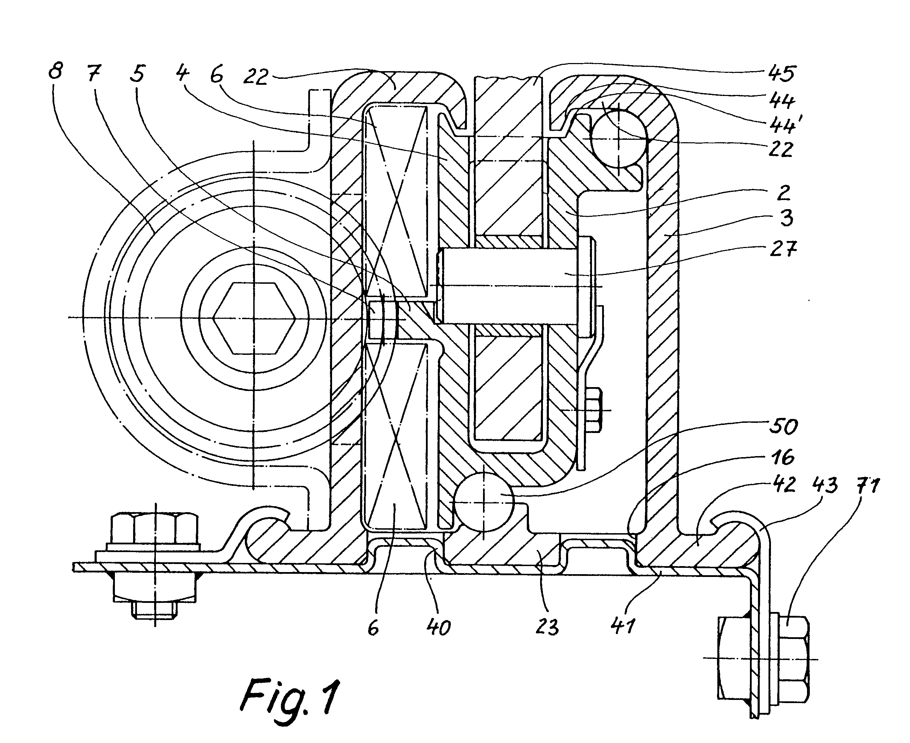

Die in Fig. 1 dargestellte Gleitschienenführung besteht aus einer als U-Profilstab ausgebildeten Innenschiene 2, die über Kugeln 50 in einer Außenschiene 3 geführt ist. Die Verbindung dieser Führung mit einem nicht gezeigten Sitz erfolgt sowohl vorn als auch hinten am Sitz über Streben 45, die an der Innenschiene 2 der rechten und linken Schienenführung mit Bolzen 27 befestigt sind. Die Außenschiene 3 ist über Krallen 43 und Schrauben 7 mit dem Bodenblech 41 eines Personenkraftwagens verbunden. Die Übertragung von Horizontalkräften ven den Außenschienen 3 in das Bodenblech 41 erfolgt über Butzen 40, die in Bohrungen 16 des Bodens 23 der Außenschiene 3 eingreifen. Die an der Außenschiene 3 angreifenden Vertikalkräfte werden von den Krallen 43 in das Bodenblech 41 abgeleitet. Die Außenschiene 3 hat einen im wesentlichen C-förmigen Querschnitt und ragt oben mit Bördeln 22 über die Innenschiene 2. Die freien Enden der Bördel 22 weisen Schrägen 44 auf, die mit entsprechenden Schrägen 44' an der Innenschiene 2 zusammenwirken und den Verbund zwischen Außen- 3 und Innenschiene 2 sichern, wenn an den Streben 45 Zugkräfte angreifen.

Die Innenschiene 2 weist an einem ihrer Schenkel 4 einen sich in Achsrichtung erstreckenden Steg 5 auf, der vom Innenplatzangebot der Außenschiene 3 her mittig angeordnet ist. Beidseitig auf diesen Steg 5 wirken an der Außenschiene 3 gehaltene Blockiervorrichtungen 6 ein, die bei plötzlichen Beschleunigungsänderungen automatisch aktiviert werden und auf den Steg 5 eine Bremswirkung ausüben, wodurch die Innenschiene 2 in der Außenschiene 3 blockiert wird und die an der Innenschiene angreifenden Kräfte an die Außenschiene 3 übertragen werden, ohne die Verstelleinrichtung der Gleitschienenführung zu belasten.

Zur linearen Verstellung von Außen- 3 und Innenschiene 2 ist am Steg 5 noch eine Verzahnung 7 vorgesehen, mit der eine an der Außenschiene 3 gehaltene Schnecke 8 kämmt, die über eine biegsame Welle angetrieben wird.

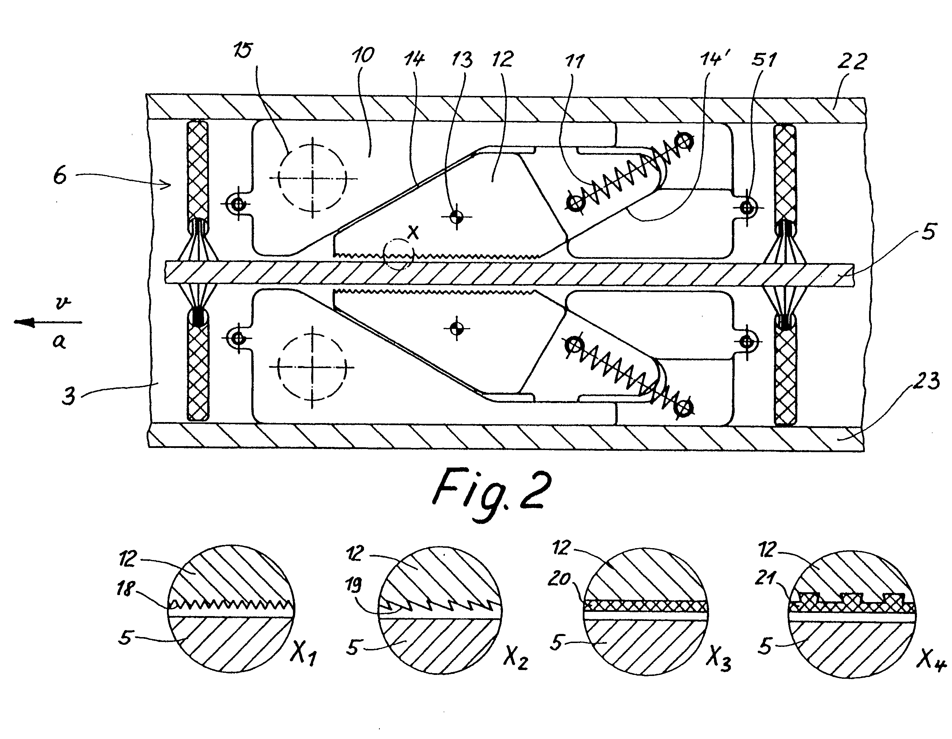

Die Fig. 2 zeigt eine einfache, wirkungsvolle und kostengünstige Blockiervorrichtung 6, die in die Gleitschienenführung nach Fig. 1 eingesetzt ist und nur aus wenigen Teilen besteht. Auf beiden Seiten des Steges 5 der Innenschiene ist innerhalb eines Gehäuses 10 mit Führungsschrägen 14 und 14' durch eine Sensorfeder 11 zugbelastet ein mit einer Sensormasse 13 ausgestallteter Klemmkeil 12 verschiebbar gelagert. Das Gehäuse 10 ist mit Schrauben 51 auf der Außenschiene 3 befestigt.

Bewegt sich das System in Richtung des Pfeiles v/a, wirkt auf die Klemmkeile 12 sowie die Sensormasse 13 eine Beschleunigung in gleicher Richtung ein. In Abhängigkeit von der Kraft der Sensorfeder 11 bewegen sich die Klemmkeile 12 von einer bestimmten Beschleunigungsschwelle an entlang der Führungsschrägen 14 auf den Steg 5 zu. Bei einer Berührung des Klemmkeiles 12 mit dem Steg 5 erfolgt zwischen diesen Bauteilen eine Klemmblockierung, die aufgrund der geometrischen Auslegung der Bauteile selbstverstärkend ist, d. h. beim Ansteigen der Zuglast am Steg 5 wird die Blockierwirkung erhöht. Da auf beiden Seiten des Steges 5 Klemmkeile 12 angreifen, wird dieser beim Auftreten von noch so großen Kräften nicht verformt, so daß die Klemmverbindung zwischen den Klemmkeilen 12 und dem Steg 5 von den Sensorfedern 10 wieder gelöst wird, sobald keine Beschleunigungskräfte auf die Klemmstücke 12 einwirken. Dieses Deblockieren kann noch dadurch unterstützt werden, daß die Gleitfläche zwischen dem Gehäuse 10 und dem Klemmkeil 12 mit einer reibungsarmen Oberfläche, z. B. einer PTFE-Beschichtung versehen sind.

Die mit dem Steg 5 zusammenarbeitende Klemmfläche des Klemmkeiles 12 sollte dagegen eine große Oberflächenreibung aufweisen. Bei einer niedrigen Ansprechwelle der Sensorfedern von z. B. 0,4g, bei der bei jeder mittelstarken Abbremsung eines Kraftfahrzeuges eine Aktivierung der Klemmkeile 12 erfolgt, sollten oberflächenschonende Reibmittel eingesetzt werden, wie eine Gummischicht 20 (Fig. 2 Vergrößerung $X_3$) oder ein Bremsbelag 21 (Fig. 2 Vergrößerung $X_4$). Liegt dagegen die Ansprech-Schwelle der Blockiervorrichtung bei etwa 5 g (Beschleunigung bei Unfällen), können auch aggressive Oberflächen zum Einsatz kommen, wie eine aufgerauhte Fläche 18 (Fig. 2 Vergrößerung $X_1$) oder gar eine sägezahnartige Fläche 19 (Fig. 2 Vergrößerung $X_2$).

Die bei einer Blockierung entstehenden horizontalen Kräfte werden über einen Zapfen 15 in eine Bohrung der Außenschiene 3 geleitet. Die vertikalen Kräfte stützen sich oben am Bördel 22 und unten am Boden 23 der Außenschiene ab.

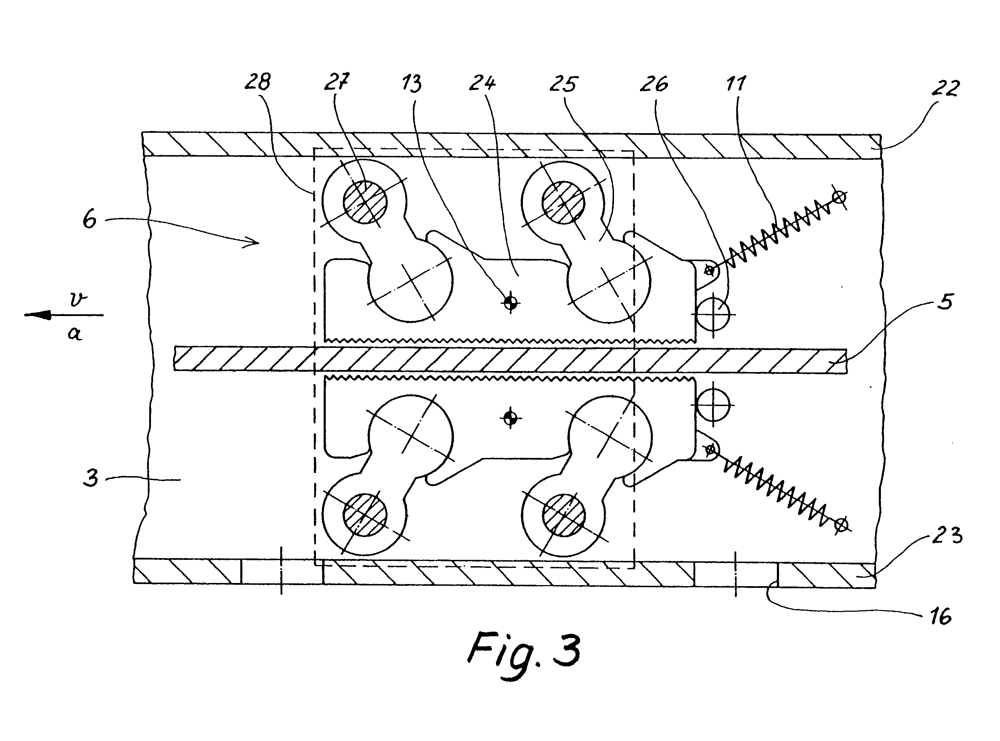

Die in Fig. 3 gezeigte Blockiervorrichtung 6 für eine Gleitschienenführung nach Fig. 1 weist auf beiden Seiten des Steges 5 der Innenschiene je einen Klemmkörper 24 auf, die über je zwei Druckhebel 25 in Parallelanordnung geführt werden. Die Sensorfedern 11 halten die Klemmkörper 24 gegen einen Anschlag 26 in Freistellung. Bei einem Stoß entgegen der Richtung v/a auf das Fahrzeug lenken die Klemmkörper 24 auf den Steg 5 zu aus und bewerkstelligen die Blockierung. Die relativ hohen Spreizkräfte, die über Bolzen 27 in die Wandung der Außenschiene 3 eingeleitet werden, können über eine zusätzliche Verstärkungsplatte 28 abgefangen werden.

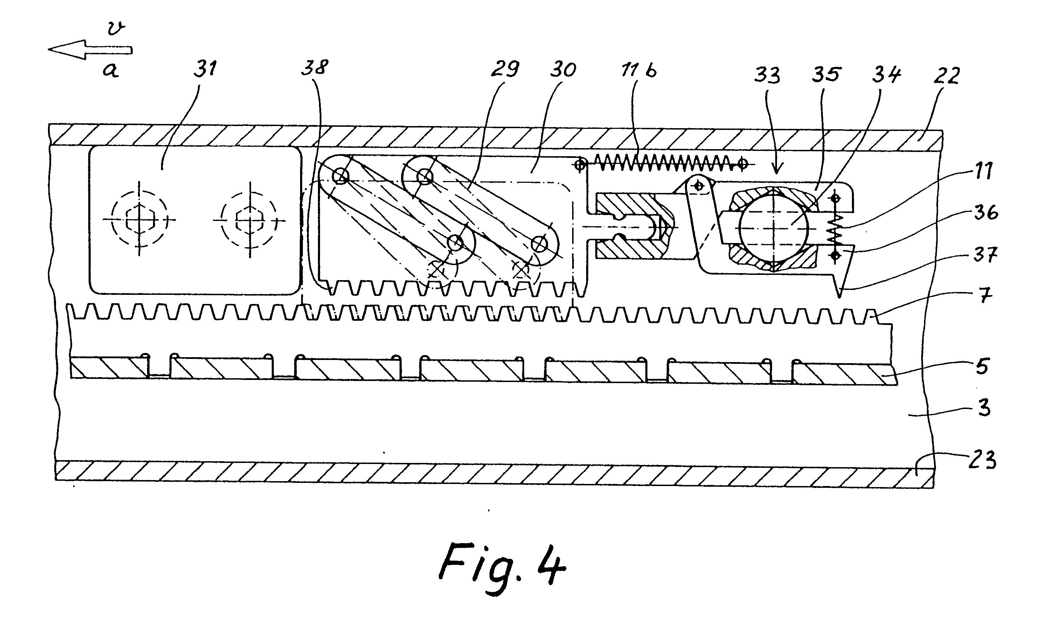

In Fig. 4 ist eine Blockiervorrichtung gezeigt, die mit der Zahnstange 7 am Steg 5 zusammenarbeitet, über die die Längsverstellung der Innenschiene relativ zur Außenschiene 3 erfolgt. Dabei ist an parallel angeordneten Führungshebeln 29 ein Sperrkörper 30 mit Sperrzähnen 38, die in die Zahnstange 7 einrastbar sind, gelagert. Eine kräftige Sensorfeder 11b hält den Sperrkörper 30 in Freistellung.

Um bei der Bewegung des Sperrkörpers 30 in die Blockierstellung eine zuverlässige Einsteuerung der Sperrzähne 38 in die Zahnlücken der Zahnstange 7 zu gewährleisten, ist dem Sperrkörper 30 ein Sensor 33 zugeordnet, der über eine Sensorfeder 11 empfindlicher eingestellt ist als das System aus Sperrkörper 30 und Sensorfeder 11b. Die Sensorfeder 11 hält mit Hilfe eines an einem Gehäuse 35 angelenkten Hebels 36 eine kugelförmige Sensormasse 34 im Gehäuse 35 fest.

Bei einer Aktivierung dieser Blockiervorrichtung verlagert sich die Sensormasse 34 und lenkt den Hebel 36 aus, dessen Hebelspitze 37 sich dabei an einen Zahn der Zahnstange 7 anlegt. Bauen sich dann die abzufangenden Kräfte in der Gleitschienenführung auf, bewegt sich die Innenschiene mit der Zahnstange 7. Diese Bewegung wird unmittelbar auf den Sperrkörper 30 übertragen, dessen Sperrzähne 38 in einer Zwangsbewegung in die Verzahnung der Zahnstange 7 einsteuern. Die Lastübertragung von der Innen- zur Außenschiene 3 erfolgt dabei über eine an der Außenschiene befestigte Anschlagplatte 31.

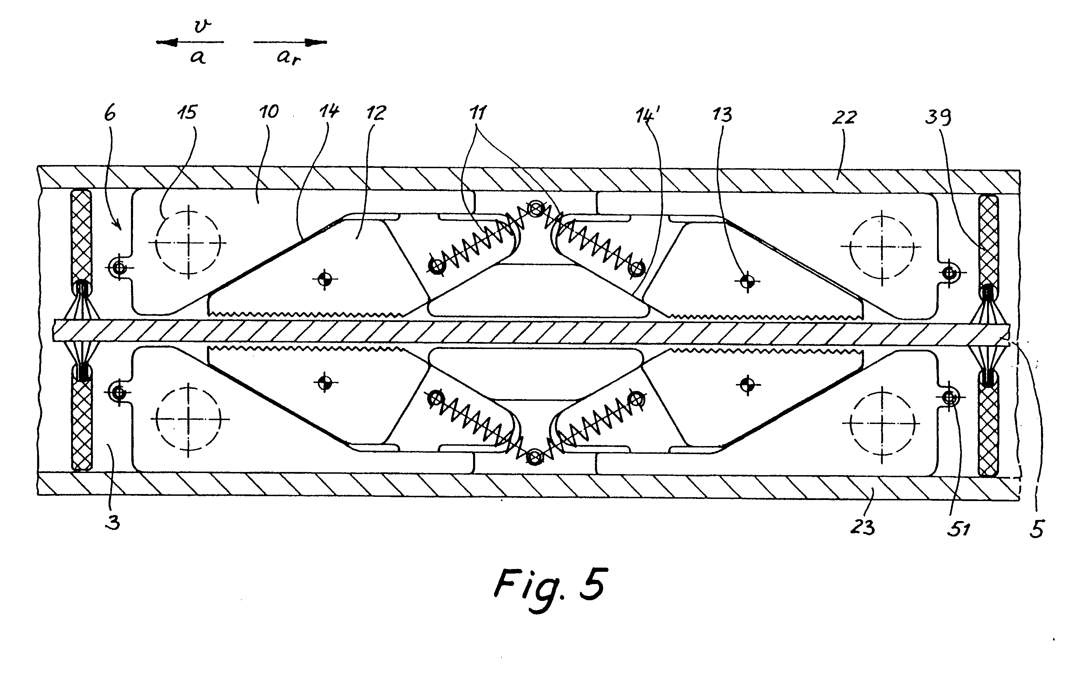

Wird die Blockiervorrichtung nach Fig. 2 spiegelbildlich in doppelter Ausführung angeordnet, wie es in Fig. 5 dargestellt ist, können die Trägheitskräfte der Massen des Sitzsystemes sowohl bei Frontal- als auch Heckaufprall des Fahrzeuges über die blockierte Gleitschienenführung in das Bodenblech des Fahrzeuges abgeleitet werden. Diese Ausgestaltung der Blockiervorrichtung nach Fig. 2 bietet noch den Vorteil, daß auf den Antrieb zur Längsverstellung des Fahrzeugsitzes bei einem Unfall keine Kräfte einwirken, so daß das Antriebssystem leicht und kostengünstig ausgebildet werden kann.

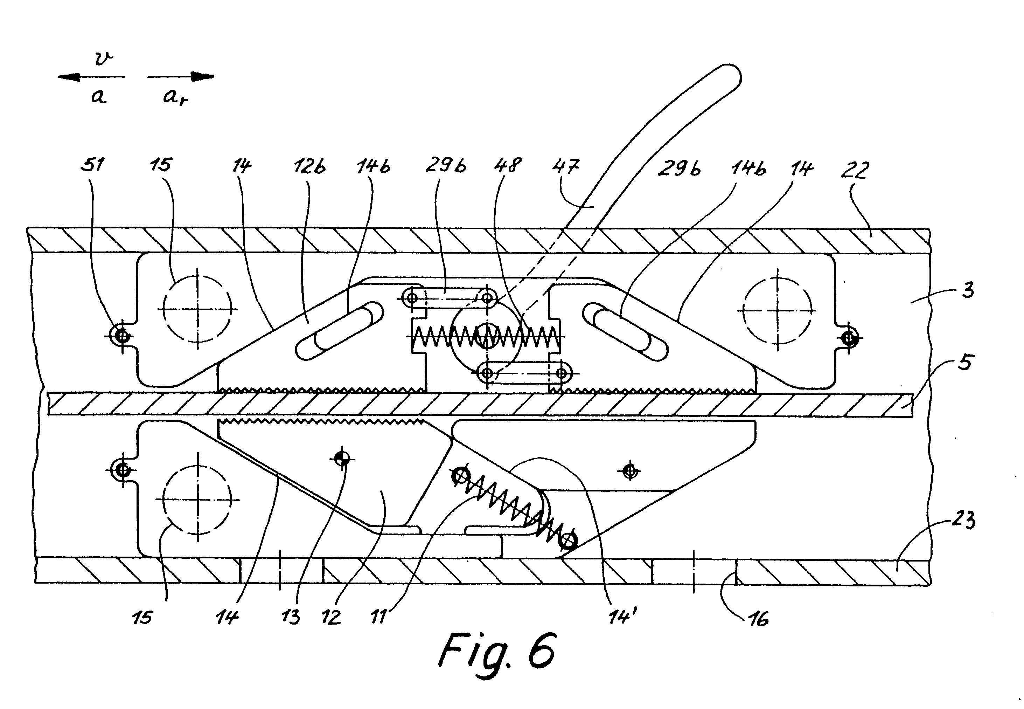

Die im vorstehenden in Verbindung mit den Fig. 1 bis 5 beschriebenen Blockiervorrichtungen betrafen ausschließlich Gleitschienenführungen mit elektrischer Sitzverstellung. In Verbindung mit Fig. 6 wird noch eine erfindungsgemäße Blockiervorrichtung für einen Sitz mit mechanischer Längsverstellung beschrieben, die analog zur in Fig. 2 dargestellten Vorrichtung ausgebildet ist.

Zwei Klemmkeile 12b werden von einer Druckfeder 48 in permanenter Blockierstellung mit dem Steg 5 gehalten. Soll die Lage von Innen- zu Außenschiene 3 und damit des Sitzes im Fahrzeug verändert werden, müssen die Klemmkeile 12b aus der Blockierstellung gelöst werden, was mit einem Hebel 47 erfolgt, bei dessen Betätigung mit Hilfe der Führungshebel 29b die Klemmkeile 12b entgegen der Kraft der Druckfeder 48 bewegt werden. Der unterhalb des Steges 5 vorgesehene Klemmkeil 12 ist beschleunigungssensitiv ausgebildet, wie es vorstehend in Verbindung mit Fig. 2 beschrieben worden ist.

In den Fig. 7 bis 9 ist noch ein Fahrzeugsitz 58 mit Einzelheiten seiner Gleitschienenführung gezeigt, an dessen Lehne 59 Gurte (nicht dargestellt) eines Personen-Rückhaltesystems angeschlagen sind.

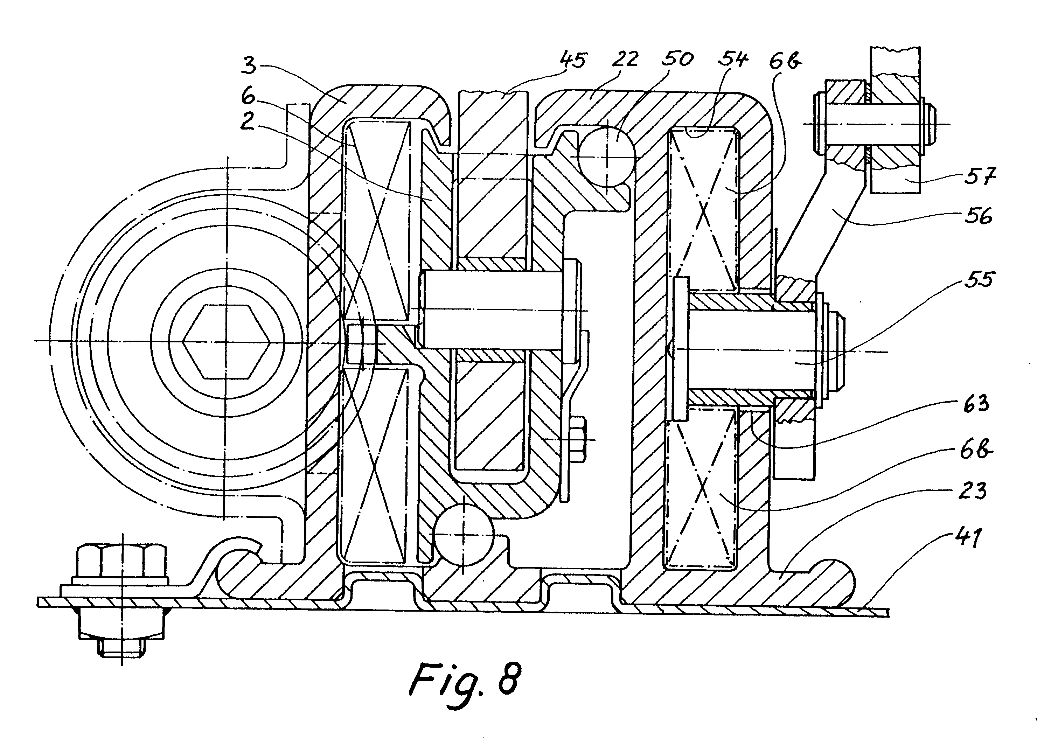

Bei einem Frontalaufprall eines Fahrzeuges wirkt eine Beschleunigung a in Richtung des Pfeiles v, so daß die Gurtkraft $F_G$ an der Oberkante der Lehne 59 wirksam wird und einen nach unten aus der Lehne 59 ragenden Kragarm 57 in entgegengesetzter Richtung verstellt. Dies wird von einer beschleunigungssensitiven Blockiervorrichtung 6b unterbunden, mit der der Kragarm 57 über einen Lenkhebel 56 in Verbindung steht und die in einer Nebenkammer 54 der Außenschiene 3 (Fig. 8) linear verschiebbar angeordnet ist.

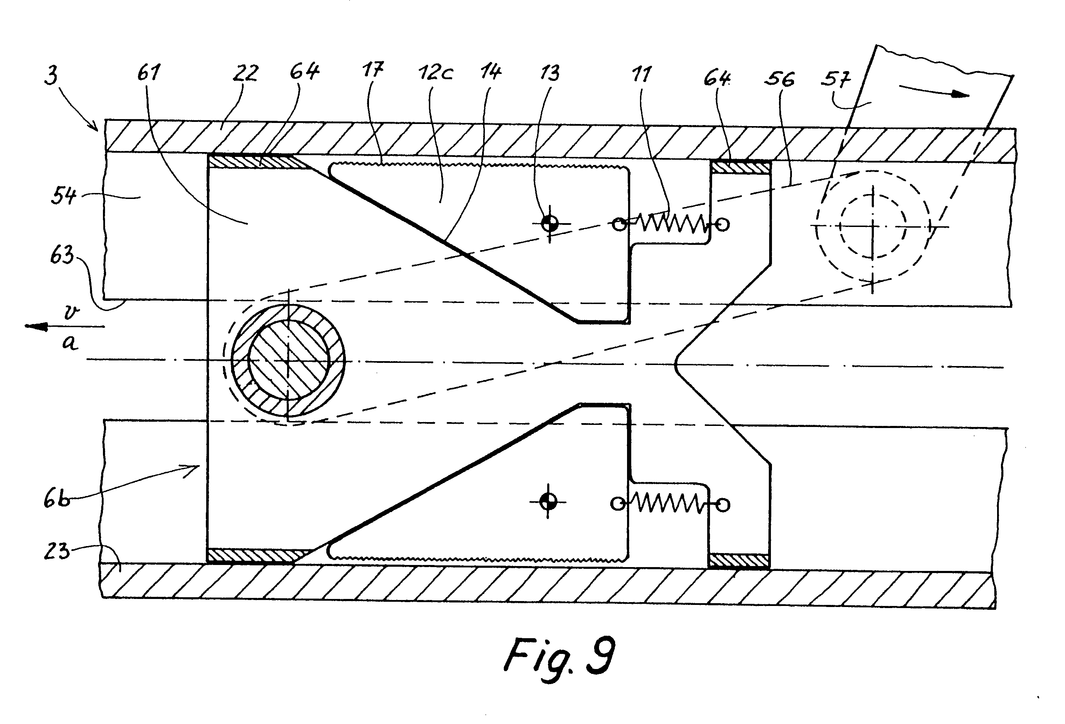

Die Blockiervorrichtung 6b (Fig. 9) weist einen Gleitkörper 61 auf, der über spielarme Gleitflächen 64 in der Nebenkammer 54 geführt wird und an zwei Führungsschrägen 14 gegen die Kraft von Sensorfedern 11 verschiebbar zwei Klemmkeile 12c eingelagert hat. Diese Klemmkeile 12c sprechen auf Beschleunigungsänderungen in gleicher Weise an wie die Klemmkeile 12 der Blockiervorrichtung nach Fig. 2, d. h. die Klemmkeile 12c bewegen sich bei einem Frontalaufprall gegen die Kraft der Sensorfedern 11 nach links. Dabei gleiten sie an den Führungsschrägen 14 entlang und stoßen mit den Klemmflächen 17 gegen die Wandungen 22 bzw. 23 der Außenschiene 3, wodurch die Blockiervorrichtung 6b sperrt und die Lehne 59 in der momentanen Lage festgehalten wird.

Die Fig. 8 zeigt noch die Anbindung des Lenkhebels 56 an der Blockiervorrichtung 6b, wozu ein Bolzen 55 am Gleitkörper 61 durch einen Schlitz 63 aus der Nebenkammer 54 ragt.

**Patentansprüche**

1. Gleitschienenführung für Fahrzeugsitze, insbesondere von Personenkraftwagen, mit einer am Fahrzeugboden festen Außenschiene (3) und einer darin längsverschieblichen, dem Sitz zugeordneten Innenschiene (2) und mit einer Verstelleinrichtung zur Ein- und Feststellung der Lage der Schienen (2; 3) zueinander, ferner mit einer beschleunigungssensitiven Blockiervorrichtung, die mindestens ein Klemmelement (12; 24; 30) aufweist, das an einer Schiene gehalten und zur blockierenden Anlage an einer Fläche eines axial sich erstreckenden Flansches (5) ausgebildet ist,

dadurch gekennzeichnet,
daß am Klemmelement (12; 24; 30) eine Sensorfeder (11; 11b) angreift, welche nach Überschreiten einer vorgegebenen Beschleunigungsschwelle eine blockierende Anlage des Klemmelements an der Fläche des axial sich erstrekkenden Flansches (5) zuläßt und nach Unterschreiten einer vorgegebenen Beschleunigungsschwelle das Klemmelement aus der Blockierstellung löst.

2. Gleitschienenführung nach Anspruch 1,
dadurch gekennzeichnet,
daß das Klemmelement ein Klemmkeil (12) mit integrierter Sensormasse (13) ist, der bei Überschreiten der Beschleunigungsschwelle an einer Führungsschräge eines mit der Außenschiene (3) festen Bereichs (10) entlang in Richtung auf die Klemmfläche des Flansches (5) gleitet.

3. Gleitschienenführung nach Anspruch 1 oder 2,
dadurch gekennzeichnet,
daß zwei gegenläufig zur Anlage an die Klemmfläche und zum Lösen bewegliche Klemmelemente (12; 12b; 24) vorgesehen sind, die zur gleichzeitigen blockierenden Anlage an einer Schiene (2; 3) ausgebildet ist.

4. Gleitschienenführung nach Anspruch 1 oder 2,
dadurch gekennzeichnet,
daß die doppelt vorgesehenen Klemmelemente (12; 12b) zur blockierenden Anlage an einander gegenüberliegende Seiten eines gemeinsamen Flansches (5) der Innenschiene (2) ausgebildet sind.

5. Gleitschienenführung nach einem oder mehreren der Ansprüche 1 bis 4,
dadurch gekennzeichnet,
daß der das bzw. die Klemmelemente (12; 24; 30) aufnehmende Bereich der Außenschiene (3) ein daran befestigtes Gehäuse (10) ist.

6. Gleitschienenführung nach einem oder mehreren der Ansprüche 1 bis 5,
dadurch gekennzeichnet,
daß die einander berührenden Flächen (14) des Gehäuses (10) und der Klemmelemente (12) mit einer PTFE-Beschichtung versehen sind.

7. Gleitschienenführung nach einem oder mehreren der Ansprüche 1 bis 6,
dadurch gekennzeichnet,
daß die auf den Flansch (5) einwirkenden Klemmfläche des Klemmelementes (12) eine rauhe (18), sägezahnartige (19) oder mit Gummi beschichtete (20) Oberfläche aufweist bzw. einen Bremsbelag (21) trägt.

8. Gleitschienenführung nach einem oder mehreren der Ansprüche 1 bis 7,
dadurch gekennzeichnet,
daß das Klemmelement ein an zwei zur Schienenachse schräg verlaufenden, aber zueinander parallel angeordneten Druckhebeln (25) oder Führungshebeln (29) angelenkter Klemm-(24) oder Sperrkörper (30) mit integrierter Sensormasse (13) ist.

9. Gleitschienenführung nach einem oder mehreren der Ansprüche 1 bis 8,
dadurch gekennzeichnet,
daß der Sperrkörper (30) Sperrzähne aufweist, die zum blockierenden Eingriff in eine am Flansch (5) vorgesehene Zahnstange (7) ausgebildet sind.

10. Gleitschienenführung nach Anspruch 9,
dadurch gekennzeichnet,
daß dem Sperrkörper (30) mit Sensorfeder (11b) ein weiterer Sensor zugeordnet ist, dessen Ansprechschwelle deutlich unter derjenigen des Feder-Masse-Systems (11b, 30) liegt und bei Aktivierung mit einer Hebelspitze (37) in die Verzahnung (7) am Steg (5) eingreift sowie das Einrasten der Sperrzähne (38) des Sperrkörpers (30) in die Zähne der Zahnstange sicherstellt.

11. Gleitschienenführung nach einem der vorhergehenden Ansprüche,
dadurch gekennzeichnet,
daß auf einer Seite des Flansches (5) mindestens ein von einer Feder (48) in Blockierstellung gehaltener Klemmkeil (12b) angreift, der aus der Blockierstellung mit einem Handhebel (47) lösbar ist, und auf der anderen gegenüberliegenden Seite des Flansches (5) ein beschleunigungssensitives Klemmelement (12; 24; 30) einwirkt.

12. Gleitschienenführung nach einem der vorhergehenden Ansprüche,
dadurch gekennzeichnet,
daß auf jeder Seite des Flansches (5) die Klemmelemente (12; 24; 30) spiegelbildlich in doppelter Ausführung vorgesehen sind.

13. Gleitschienenführung nach einem der vorhergehenden Ansprüche mit einem Fahrzeugsitz (58), an dessen Lehne (59) die Gurte eines Personenrückhaltesystemes angeschlagen sind,
dadurch gekennzeichnet,

daß in die Lehne (59) mindestens ein zur Schienenführung weisender Kragarm (57) eingebettet ist, der mit einer in einer der Nebenkammer (54) der Außenschiene (3) linear verschiebbaren Blockiervorrichtung (6b) in Wirkverbindung steht.

14. Gleitschienenführung nach Anspruch 13,
    dadurch gekennzeichnet,
    daß die Blockiervorrichtung (6b) aus einem Gleitkörper (61) besteht, der spielarm über Gleitflächen (64) in der Nebenkammer (54) geführt wird und der zwei an zwei Führungsschrägen (14) gegen die Kraft von Sensorfedern (11) verschiebbare Klemmkeile (12c) eingelagert hat.

15. Gleitschienenführung nach Anspruch 13 oder 14,
    dadurch gekennzeichnet,
    daß im Gleitkörper (61) zwei Paar Klemmkeile (12c) in spiegelbildlicher Ausführung angeordnet sind, die derart angeordnet sind, daß eine Blockierung zwischen den beiden Schienen beim negativen Beschleunigen in entgegengesetzter Richtung erfolgt.

## Claims

1. Slide rail guide for vehicle seats, more particularly of passenger vehicles, with an outer rail (3) fixed on the vehicle floor and an inner rail (2) associated with the seat and set longitudinally displaceable in the outer rail, and with an adjustment device for adjusting and setting the position of the rails (2:3) relative to each other, furthermore with an acceleration-sensitive blocking device which has at least one clamping element (12;24;30) which is held on a rail and is designed for blocking abutment against a surface of an axially extending flange (5) characterised in that the clamping element (12;24;30) is engaged by a sensor spring (11:11b) which when a predetermined acceleration threshold has been exceeded allows a blocking abutment of the clamping element against the surface of the axially extending flange (5) and in the event of understepping of the predetermined threshold value releases the clamping element from the blocking position.

2. Slide rail guide according to claim 1 characterised in that the clamping element is a clamping wedge (12) with integrated sensor mass (13) which in the event of exceeding the acceleration threshold slides along on a guide incline of an area (10) fixed with the outer rail (39) in the direction of the clamping face of the flange (5).

3. Slide rail guide according to claim 1 or 2 characterised in that two clamping elements (12;12b;24) are provided which are movable in opposite directions to abut the clamping face and for release and are designed for a simultaneous blocking abutment against a rail (2:3).

4. Slide rail guide according to claim 1 or 2 characterised in that the clamping elements (12;12b;24) which are provided double are designed for a blocking abutment against opposite sides of a common flange (5) of the inner rail (2).

5. Slide rail guide according to one or more of claims 1 to 4 characterised in that the area of the outer rail (3) accommodating the clamping elements (12;24;30) is a housing (10) fixed thereon.

6. Slide rail guide according to one or more of claims 1 to 5 characterised in that the contacting faces (14) of the housing (10) and the clamping elements (12) are provided with a PTFE coating.

7. Slide rail guide according to one or more of claims 1 to 6 characterised in that the clamping face of the clamping element (12) acting on the flange (5) has a rough (18). saw-tooth like (19) or rubber-coated (20) surface or supports a brake lining (21).

8. Slide rail guide according to one or more of claims 1 to 7 characterised in that the clamping element is a clamping (24) or locking body (30) with integrated sensor mass (13) and attached to two compression levers (25) or guide levers (29) which run inclined to the rail axis but are mounted parallel to each other.

9. Slide rail guide according to one or more of claims 1 to 8 characterised in that the locking body (30) has locking teeth which are designed for blocking engagement in a gear rod (7) provided on the flange (5).

10. Slide rail guide according to claim 9 characterised in that the locking body (30) with sensor spring (11b) is associated with a further sensor whose response threshold lies significantly below that of the spring mass system (11b,30) and in the event of activation engages with a lever tip (37) into the gearing (7) on the web (5) and ensures the engagement of the locking teeth (38) of the locking body (30) into the teeth of the gear rod.

11. Slide rail guide according to one of the preceding claims
characterised in that at least one clamping wedge (12b) held in the blocking position by a spring (48) and releasable from the blocking position by a handle lever (47) engages on one side of the flange (5), and an acceleration-sensitive clamping element (12:24;30) acts on the other opposite side of the flange (5).

12. Slide rail guide according to one of the preceding claims
characterised in that the clamping elements (12;24;30) are provided mirror-symmetrical in double arrangement on each side of the flange (5).

13. Slide rail guide according to one of the preceding claims with a vehicle seat (58) on whose backrest (59) are attached the straps of a person restraint system.
characterised in that at least one collar arm (57) pointing towards the rail guide is embedded in the backrest (59) and is in active engagement with a blocking device (6b) which is linearly displaceable in one of the secondary chambers (54) of the outer rail (3).

14. Slide rail guide according to claim 13
characterised in that the blocking device (6b) consists of a slide body (61) which is guided with minimum play over slide faces (64) in the secondary chamber (54) and which has two clamping wedges (12c) which are displaceable on two guide inclines (14) against the force of sensor springs (11).

15. Slide rail guide according to claim 13 or 14
characterised in that in the slide body (61) there are two pairs of clamping wedges (12c) set in mirror symmetrical arrangement and mounted so that blocking occurs between the two rails in the event of negative accelerations in the opposite direction.

**Revendications**

1. Guide à glissière pour siège de véhicule, notamment de voitures particulières, comprenant un rail externe (3), fixée au sol du véhicule, et un rail interne (2), conjugué avec le siège et déplaçable dans le rail externe, un dispositif de réglage (2; 3) pour le déplacement et la fixation des rails en position adéquate par rapport l'une à l'autre, et, de plus, un dispositif de blocage sensible à l'accélération, présentant au moins un élément de blocage (12; 24; 30), maintenu sur un rail et conçu sous forme d'installation de blocage sur une surface d'une bride (5) s'étendant axialement, caractérisé par le fait qu'un ressort détecteur (11, 11b), agissant sur l'élément de blocage (12; 24; 30), permet la prise d'appui de l'élément de serrage sur la surface de la bride (5) s'étendant axialement, provoquant ainsi le blocage lorsqu'un seuil d'accélération prédéterminé est dépassé, et débloque l'élément de serrage dès que l'accélération est de nouveau inférieure à ce seuil.

2. Guidage à glissière selon revendication 1, caractérisé par le fait que l'élément de serrage est une clavette de serrage (12), dans laquelle une masse détectrice (13) est intégrée. Lorsque l'accélération dépasse le seuil admissible, la clavette de serrage (12) glisse vers la surface de blocage de la bride (5), le long d'un chanfrein de guidage d'un secteur (10) fixé au rail externe (3).

3. Guidage à glissière selon revendication 1 ou 2, caractérisé par le fait que deux éléments de serrage (12; 12b; 24), mobiles en sens opposé pour la prise d'appui sur la surface de blocage et le déblocage, sont prévus et conçus dee sorte à prendre simultanément appui sur un rail (2; 3) aux fins de blocage.

4. Guidage à glissière selon revendicationtion 1ou 2, caractérisé par le fait que les éléments de serrage (12; 12b; 24), prévus en double, sont conçus de sorte à prendre appui sur les côtés opposés d'une bride commune (5) du rail interne (2) aux fins de blocage.

5. Guidage à glissière selon une ou plusieurs revendications 1 à 4, caractérisé par le fait que le secteur du rail externe (3) accueillant le ou les élément/s de serrage (12; 24; 30) est un carter (10), fixé au rail externe (3).

6. Guidage à glissière selon une ou plusieurs revendications 1 à 5, caractérisé par le fait que les surfaces (14) du carter (10) se contactant et les éléments de serrage (12) sont pourvus d'un revêtement en PTFE.

7. Guidage à glissière selon une ou plusieurs revendications 1 à 6, caractérisé par le fait que la surface de serrage de l'élément de serrage (12), agissant sur la bride (5), est rugueuse (18), en forme de dents de scie (19) ou recouverte de caoutchouc (20) ou revêtue d'une garniture de frein (21).

8. Guidage à glissière selon une ou plusieurs revendications 1 à 7, caractérisé par le fait que l'élément de blocage est un élément de serrage (24) ou d'obstruction(30) avec masse détectrice (12) intégrée, articulé par deux leviers de pression (25) ou branches d'entraînement (29), disposés parallèlement par rapport l'un à l'autre, mais s'étendant obliquement par rapport à l'axe du rail.

9. Guidage à glissière selon une ou plusieurs revendications 1 à 8, caractérisé par le fait que l'élément obstruant (30) est pourvu de cliquets, conçues de sorte à s'encliqueter dans une crémaillère (7), équipant la bride (5), aux fins de bloquage.

10. Guidage à glissière selon revendication 9, caractérisé par le fait que l'élément d'obstruction (30) avec ressort détecteur (11b) est équipé d'un autre détecteur , dont le seuil de réponse est nettement inférieur à celui du système ressort-masse (11b, 30) et qui, actionné par une pointe de levier (37), agit sur la denture (7) de la bride (5) et assure l'enclenchement des cliquets (38) de l'élément obstruant (30) dans les dents de la crémaillère.

11. Guidage à glissière selon l'une des revendications précédentes, caractérisé par le fait qu'une clavette de serrage (12b) au moins, maintenue en position bloquée par un ressort (48), agit sur un côté de la bride (5) et peut être débloquée à l'aide d'un levier à main (47), tandis qu'un élément de blocage (12; 24; 30) sensible à l'accélération agit sur le côté opposé de la bride (5).

12. Guidage à glissière selon l'une des revendications précédentes, caractérisé par le fait que les éléments de blocage (12; 24; 30) sont prévus, inversés, en double exécution, de chaque côté de la bride (5).

13. Guidage à glissière selon une revendications précédentes avec un siège de véhicule (58), au dossier (59) duquel les sangles d'un système de retenue de passager sont montées, caractérisé par le fait qu'au moins un bras en porte à faux (57), dirigé vers le guidage à glissière est incorporé dans le dossier (59) et concourt avec un dispositif de blocage (6b), mobile linéairement dans l'une des chambres secondaires (54) du rail externe 3.

14. Guidage à glissière selon revendication 13, caractérisé par le fait que le dispositif de blocage (6b) est composé d'un corps de glissement (61), guidé, avec un jeu minime, sur des surfaces de glissement (64), dans la chambre secondaire (54) et équipé de deux clavettes de serrage (12c) mobiles le long de deux chanfreines de guidage (14) contre la force exercée par des ressorts détecteurs (11).

15. Guidage à glissière selon revendication 13 ou 14, caractérisé par le fait que le corps de glissement (61) est équipé de deux paires de clavettes de serrage (12c) d'exécution inversée, disposées de sorte qu'un blocage a lieu entre les deux rails en cas d'accélération négative dans le sens opposé.

Fig. 1

EP 0 242 859 B1

Fig. 2

*Fig. 3*

EP 0 242 859 B1

*Fig. 4*

EP 0 242 859 B1

*Fig. 5*

EP 0 242 859 B1

Fig. 6

Fig. 7

Fig. 8

EP 0 242 859 B1

Fig. 9

EP 0 242 859 B1